# EUROPEAN PATENT SPECIFICATION

(11) **EP 4 218 406 B1**
(45) Date of publication and mention of the grant of the patent: **04.09.2024**
(21) Application number: 23153623.6
(22) Date of filing: 27.01.2023
(51) Int. Cl.: A01K 5/01, A01K 5/02, A01K 9/00, A01K 1/00

(54) **MACHINE FOR THE FEEDING OF QUADRUPEDS AND IN PARTICULAR OF CALVES AND BREEDING SYSTEM COMPRISING SUCH A MACHINE**
MASCHINE ZUR FÜTTERUNG VON VIERBEINEREN UND INSBESONDERE VON KÄLBERN UND AUFZUCHTSYSTEM MIT EINER SOLCHEN MASCHINE
MACHINE D'ALIMENTATION DE QUADRUPÈDES ET EN PARTICULIER DE VEAUX ET SYSTÈME D'ÉLEVAGE COMPRENANT UNE TELLE MACHINE

(30) Priority: 01.02.2022 IT 202200001691
(43) Date of publication of application: 02.08.2023
(73) Proprietor: Magrin, Stefano, 36020 Albettone (VI) (IT)
(72) Inventor: Magrin, Stefano, 36020 Albettone (VI) (IT)
(74) Representative: Marchioro, Paolo

(56) References cited:
- CN-A- 108 849 572
- CN-A- 113 016 646
- DE-C- 942 422
- US-A- 3 421 484
- US-A1- 2017 360 014

## Description

The invention concerns a machine for the feeding of quadrupeds, and in particular of calves, and a breeding system comprising such a machine.

Every day a calf must consume enough milk to cover its growth needs.

In all breeding modes, a small quantity of feed or other type of fodder is also introduced into the feed of each calf. The intake of plant fibres makes it possible to take into account the physiological evolution of the animal's digestive system, as required by European legislation.

The lactation feed, a compound of powdered milk and dietary supplements, is a complete and balanced foodstuff. It is distributed to the calves diluted in hot water.

In specialized breeding farms, calves take their ration whenever they want, through automatic milk dispensers, or twice a day, when the breeder brings them the milk.

In most breeding farms, the distribution of milk, or of another feeding liquid, and of a solid feed is made by one or more operators who have to feed a large number of livestock once or twice a day on a daily basis, in addition to normally carrying out other tasks related to the management of the breeding farm.

The activities related to animal feeding are very time-consuming and labour-intensive, and also require a great deal of experience in the preparation of the chosen foodstuffs which must be given to the animals in the right quantities and at the right times.

Related prior art feeders are known from CN113016646-A, US3421484-A, US2017360014-A, CN108849572-A and DE942422-C.

The task of the present invention is to develop a machine for the feeding of quadrupeds, and in particular of calves, capable of overcoming the aforementioned drawbacks and limitations of the known art.

In particular, an object of the invention is to develop a machine that in a breeding farm allows saving in terms of labour for the activities of delivering foodstuffs to livestock.

Another object of the invention is to develop a compact machine that can also transit in the already existing feeding lanes.

A further object of the invention is to develop a machine that operates automatically with precision and speed that are higher than what is normally achievable by a human operator.

Still, an object of the invention is to develop a machine that respects the needs and health of the animals to which it confers the foodstuffs.

The task as well as the aforementioned objects are achieved by a machine for the feeding of quadrupeds and in particular of calves according to claim 1, and by a breeding system comprising such a machine according to claim 8. Further characteristics of the machine according to claim 1 are described in the dependent claims.

The task and the aforesaid objects, together with the advantages that will be mentioned hereinafter, are indicated by the description of an embodiment of the invention, which is given by way of non-limiting example with reference to the attached drawings, where:

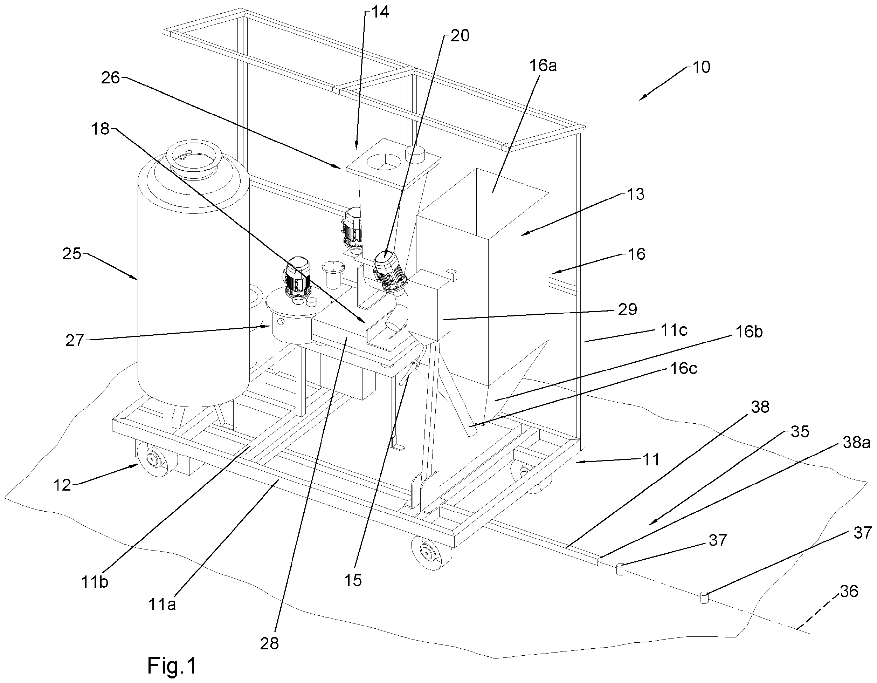

- Figure 1 represents a perspective view of a machine according to the invention;
- Figure 2 represents a side view of a machine according to the invention;

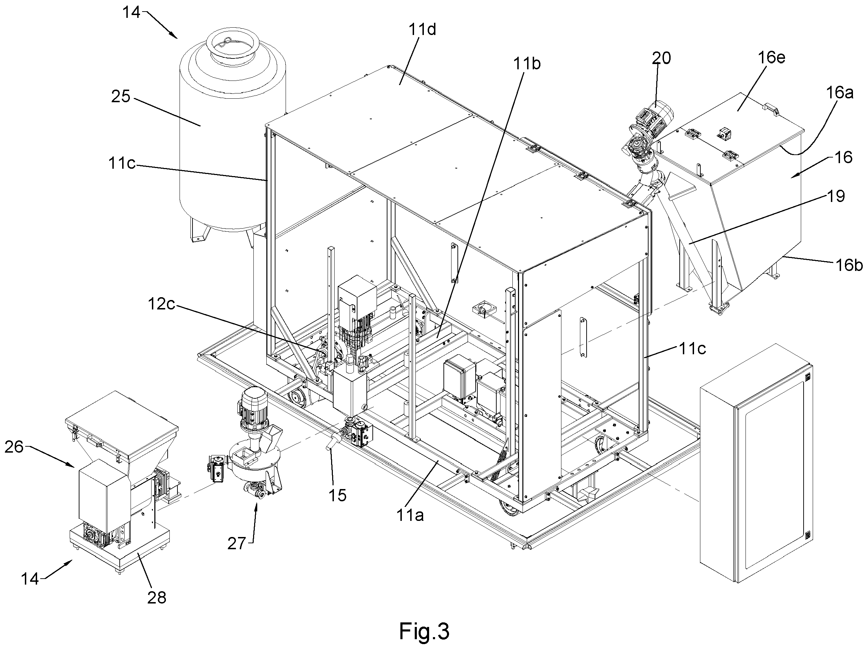

- Figure 3 represents a perspective exploded view of the machine according to the invention;
- Figure 4 represents a perspective view of a first component of the machine according to the invention;
- Figure 5 represents a side view of the first component of Figure 4;
- Figure 6 represents a detail of Figure 5;
- Figure 7 represents a perspective view of a second component of the machine according to the invention;
- Figure 8 represents a side view of a third component of the machine according to the invention;
- Figure 9 represents a side view of a fourth component of the machine according to the invention;
- Figure 10 is a diagram of the machine according to the invention;
- Figure 11 represents a schematic plan view of a breeding system comprising a machine according to the invention.

With reference to the cited figures, a machine for the feeding of quadrupeds according to the invention is indicated as a whole with the number **10.**

This machine **10** comprises a load-bearing frame **11,** on which there are mounted:
- motorized means **12** for sliding on the ground, for the movement of the load-bearing frame **11;**
- a first group **13** configured for the automatic dispensing of solid feed;
- a second group **14** configured for preparing and making available a feeding liquid by means of a suction nozzle **15.**

In the embodiment of the machine **10** according to the invention described herein, to be understood by way of example and not limitation of the invention itself, the load-bearing frame **11** comprises a base frame **11a** with reinforcing crosspieces **11b.**

The load-bearing frame **11** also comprises a plurality of perimeter uprights **11c.** The load-bearing frame **11** also comprises a cover **11d.**

The first group **13** comprises:
- a first hopper **16** for a solid feed, with an upper loading opening **16a** and a bottom **16b** with an outlet opening **16c;**
- lifting means **17** configured to lift the solid feed from the outlet opening **16c** to a discharge chute **18.**

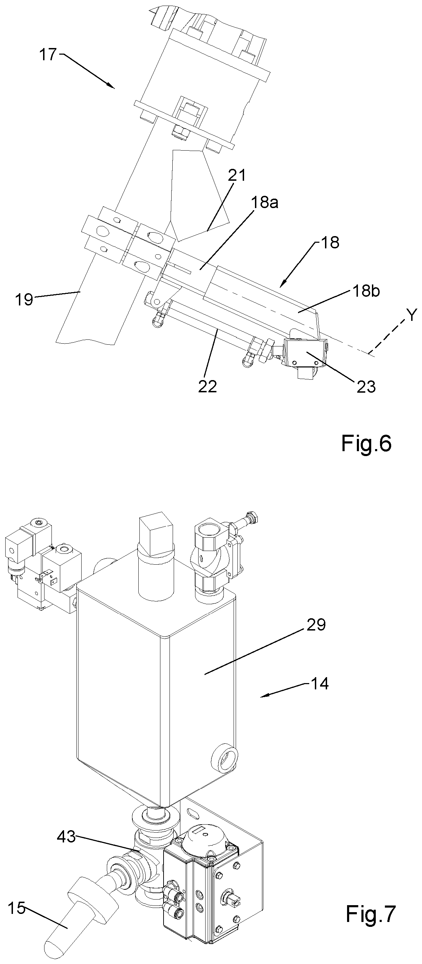

This discharge chute **18** is clearly visible in Figure 6.

The outlet opening **16c** of the first hopper **16** is not visible but is to be understood as being a through opening defined on the wall of the first hopper **16** at the bottom **16b.**

The upper loading opening **16a is** closed by an openable cover **16e.**

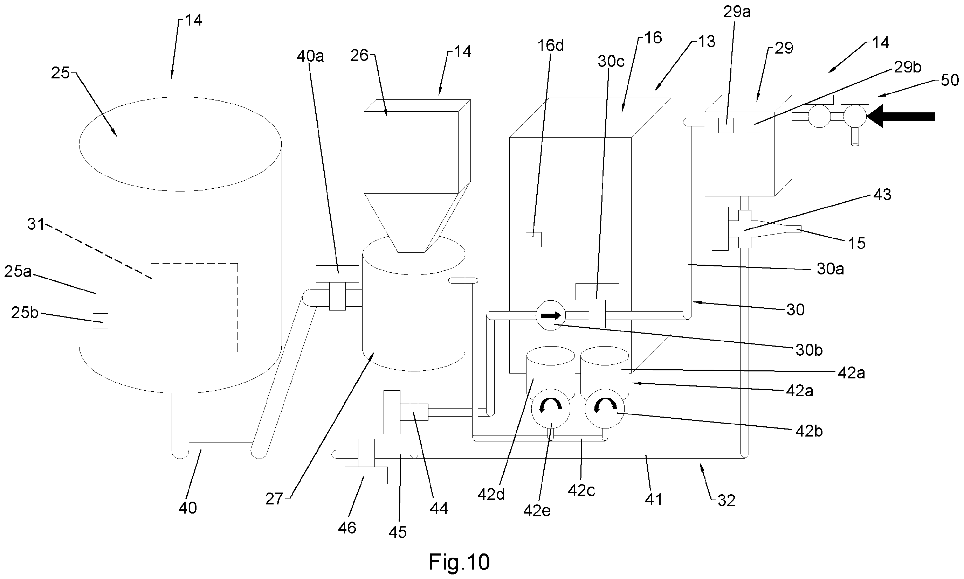

In the first hopper **16** there is a level sensor **16d,** schematized in Figure 10.

In the embodiment of the invention described herein, by way of example and not limitation of the invention itself, the lifting means **17** comprise a lifting tube **19** inside which there is a screw, driven by a motor **20,** which causes the ascent of said solid feed from the outlet opening **16c** to a discharge port **21.**

The discharge port **21** is configured and positioned such that said solid feed falls from the discharge port **21** onto the discharge chute **18.**

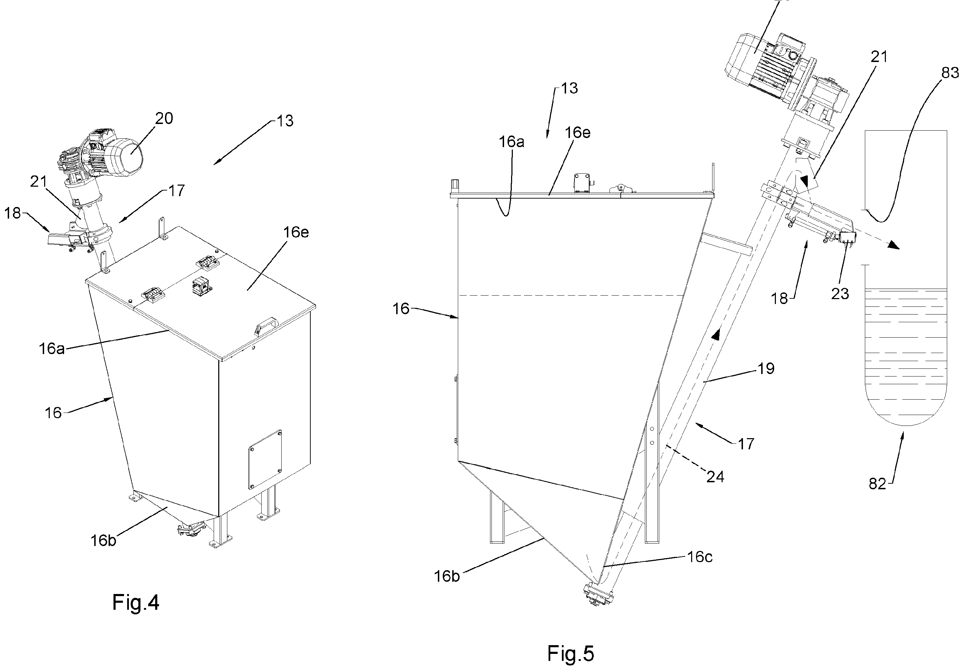

The path of the solid feed from the first hopper **16** to the discharge chute **18** is schematically represented in hatching in Figure 5 and is indicated with the number **24.**

According to the invention, the discharge chute **18** is telescopic, and is actuated by a corresponding actuator **22.**

This actuator **22** is to be understood as being pneumatic.

Alternatively, said actuator **22** is of the electric type.

In particular, as shown in Figure 6, the discharge chute **18** comprises a fixed part **18a** and a movable drawer **18b** configured to translate with respect to the fixed part **18a** in a direction Y of lengthening and shortening of the discharge chute **18.**

The movable drawer **18b** of the discharge chute **18** supports a level sensor **23** configured and positioned to detect the level of solid feed present inside a feeder **82,** the machine **10** being positioned such that the discharge chute **18** allows the descent of the solid feed from the discharge port **21** to a loading window **83** of the feeder **82,** as schematized in Figure 5.

The feeder **82** is to be understood as consisting of a box comprising a loading window **83** available for the introduction of a solid feed, and an opening for use, not illustrated for simplicity's sake and to be understood as known, from which an animal accesses the solid feed present in the same feeder **82.**

This first group **13** is obviously mounted on board the load-bearing frame **11.**

The second group **14** comprises:
- a first tank **25** for containing water;
- a doser **26** for a powdered foodstuff **P** to be dissolved in water, for example milk powder;
- a mixer **27** configured to receive water **W** from the first tank **25** and a quantity of said powdered foodstuff **P** from said doser **26,** said mixer **27** being configured to dispense the feeding liquid **LA;**
- a weighing device **28** configured and positioned so as to detect the weight of said powdered foodstuff **P** to be used in said mixer **27;**
- a second collection tank **29,** configured to receive and accumulate the feeding liquid;
- a transfer line **30** configured to transfer said feeding liquid leaving said mixer **27** to the second tank **29;**
- the suction nozzle **15,** configured to receive the feeding liquid from the second tank **29.**

The suction nozzle **15** comprises a teat.

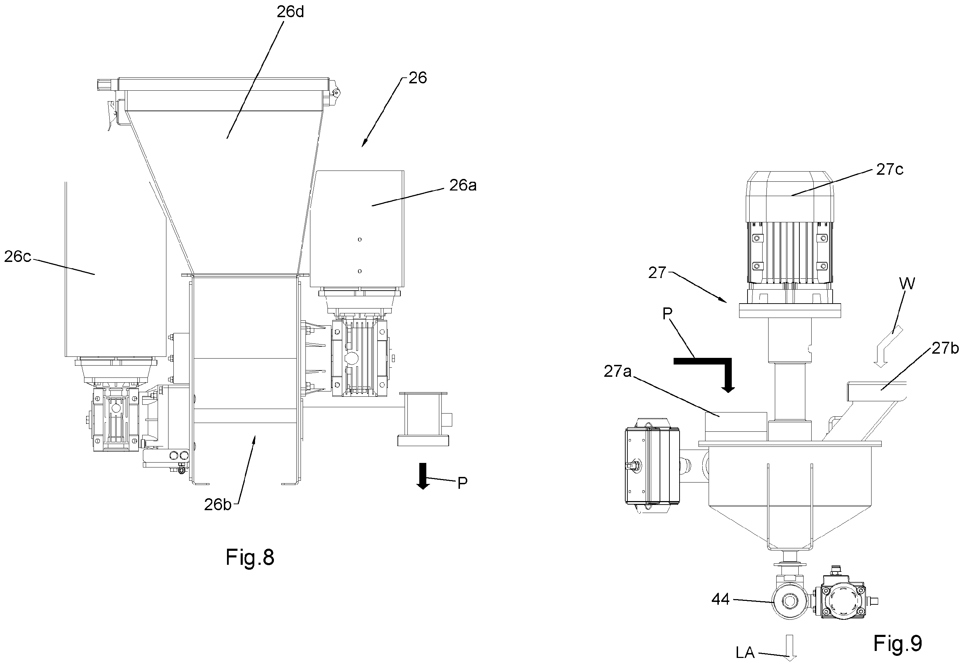

The doser **26,** exemplified in Figure 8, comprises a second hopper **26d** inside which a mixing tool operates, to be understood as of known type and not illustrated for simplicity's sake, driven by a first motor **26a.**

The first motor **26a** is to be understood as being able to be an electric motor or a pneumatic motor, or a motor of another type depending on the needs and technical requirements.

The doser **26** comprises a transfer screw **26b** driven by a second motor **26c.**

The second motor **26c** is to be understood as being able to be an electric motor or a pneumatic motor, or a motor of another type depending on the needs and technical requirements.

The transfer screw **26b** is configured to transfer the powdered foodstuff contained in the doser **26** from the bottom of the doser **26** to a first loading port **27a** of the mixer **27.**

This transfer screw **26b** has a substantially horizontal axis.

The mixer **27** therefore comprises a first loading port **27a** for the introduction of the powdered foodstuff **P** from said doser **26,** and a second loading port **27b** for the introduction of water **W** from the first tank **25.**

The mixer **27** is driven by a corresponding third motor **27c.**

This third motor **27c** is to be understood as being able to be an electric motor or a pneumatic motor, or a motor of another type depending on the needs and technical requirements.

The mixer **27** comprises a heating plate configured to keep the temperature of the water inside the mixer **27** itself constant.

Also the second tank **29** comprises a heating plate configured to keep constant the temperature of the feeding liquid accumulated inside the second tank **29** itself.

The weighing device **28** consists essentially of scales, which scales are configured and positioned so as to measure the decrease in weight of the doser **26** following each dosing operation, i.e. after the exit of a quantity of powdered foodstuff **P** from the doser **26** towards the mixer **27.**

As well schematized in Figure 10, the transfer line **30** comprises:
- a connection duct **30a** between the outlet of the mixer **27** and an inlet of the second tank **29;**
- a pump **30b,** configured to transfer the feeding liquid from the mixer **27** to the second tank **29.**

The connection line **30** also comprises a first valve **30c,** of the two-way type, located downstream of the pump **30b** and upstream of the second tank **29.**

Said first valve **30c** is configured to cause the opening or closing of the connection duct **30a.**

This first valve **30c** is, for example, of the pneumatically controlled type.

In an alternative embodiment, the first valve **30c** is to be understood as being able to be of a different type of actuation, for example of an electrically actuated type.

The second group **14** comprises a heating system **31** for the water contained in said first tank **25.**

Such heating system **31,** by way of not limiting example, is of the type comprising an electrical water heating resistance, which electrical resistance is placed inside the first tank **25** itself.

Also the connection line **30** comprises a heating system configured to keep constant the temperature of the water flowing in the same connection line **30.**

By way of example, said heating system of the connection line **30** comprises heating bands placed so as to surround the connection duct **30a.**

The first tank **25** comprises a first level sensor **25a** and a first temperature sensor **25b.**

The second tank **29** comprises a second level sensor **29a** and a second temperature sensor **29b.**

These level sensors **25a** and **29a** and these temperature sensors **25b** and **29b** are schematized in Figure 10.

The first tank **25** is connected to the mixer **27** through a first pipe **40;** the water passes from the first tank **25** to the mixer **27** by gravity.

The first pipe **40** comprises a second valve **40a** configured to cause the opening or closing of the first pipe **40.**

The first pipe **40** also comprises an electronic meter configured to measure the passage of a predetermined quantity of water.

This second valve **40a** is, for example, of the pneumatically controlled type.

In an alternative embodiment, the second valve **40a** is to be understood as being able to be of a different type of actuation, for example of an electrically actuated type.

The second group **14** also comprises a washing circuit **32** for washing said mixer **27,** said second tank **29,** said transfer line **30** and said suction nozzle **15.** Said washing circuit **32** comprises:
- a return duct **41,** configured to connect the second tank **29** with the connection duct **30a** upstream of the pump **30b;**
- a detergent delivery group **42** configured to introduce detergent into the mixer **27.**

The return duct **41** is connected to the second tank **29** and to the suction nozzle **15** by means of a third valve **43.**

This third valve **43** is of the three-way type.

This third valve **43** is, for example, of the pneumatically controlled type.

In an alternative embodiment, the third valve **43** is to be understood as being able to be of a different type of actuation, for example of an electrically actuated type.

This third valve **43,** in particular, is of the 'T'-three-way type.

The return duct **41** is connected to the outlet of the mixer **27** and to the connection duct **30a** by means of a fourth valve **44.**

This fourth valve **44** is of the three-way type.

This fourth valve **44** is, for example, of the pneumatically controlled type.

In an alternative embodiment, the fourth valve **44** is to be understood as being able to be of a different type of actuation, for example of an electrically actuated type.

This fourth valve **44,** in particular, is of the 'L'-three-way type.

The return duct **41** also comprises a discharge branch **45.**

This discharge branch **45** comprises a fifth valve **46.**

This fifth valve **46** is of the two-way type.

This fifth valve **46** is configured to cause the opening or closing of the discharge branch **45.**

This fifth valve **46** is, for example, of the pneumatically controlled type.

In an alternative embodiment, the fifth valve **46** is to be understood as being able to be of a different type of actuation, for example of an electrically actuated type.

In the present example embodiment of the invention, which is to be intended as exemplary and non-limiting the invention itself, the detergent delivery group **42** comprises at least one detergent tank **42a** connected to a dispensing pump **42b** that pushes the detergent from the tank **42a** to the mixer **27** through a tube for the detergent **42c.**

Advantageously, the detergent delivery group **42** comprises two detergent tanks **42a** and **42d** connected to a respective dispensing pump **42b** and **42e.**

In particular, and preferably, a first tank **42a** contains a disinfectant detergent, and the second tank **42d** contains an alkaline detergent, particularly effective against greases.

The dispensing pumps **42b** and **42e** push the detergent from the respective tanks **42a** and **42d** to the mixer **27** through a common tube for the detergent **42c.**

The dispensing pumps **42b** and **42e** are controlled to operate alternately, so that the two detergents are used alternately, first the one then the other.

The machine **10** comprises a ground guide system **35** configured to lead said machine **10** along a predetermined path **36.**

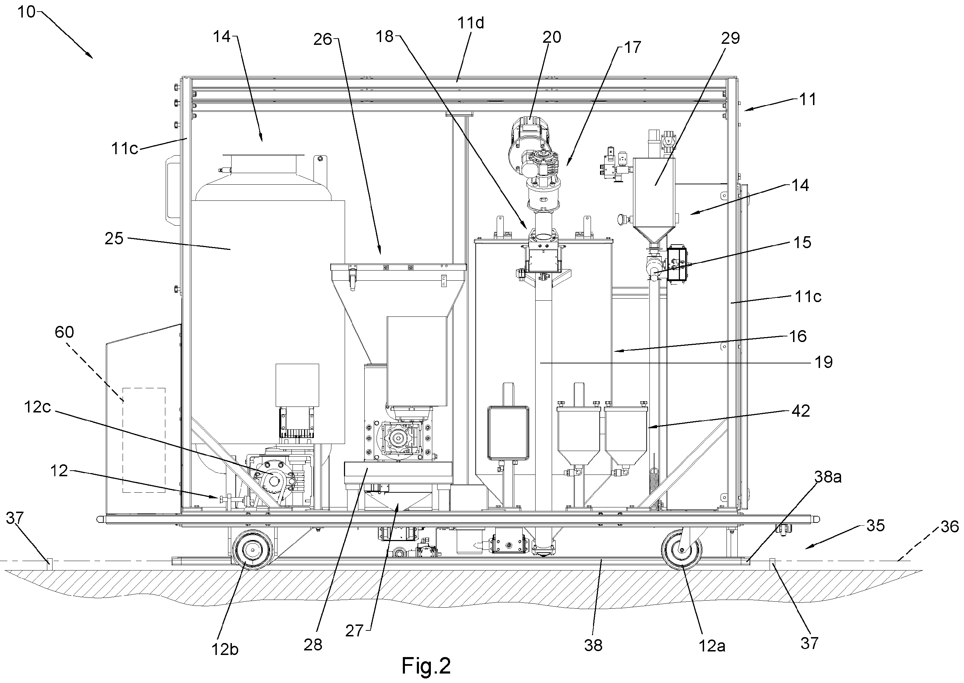

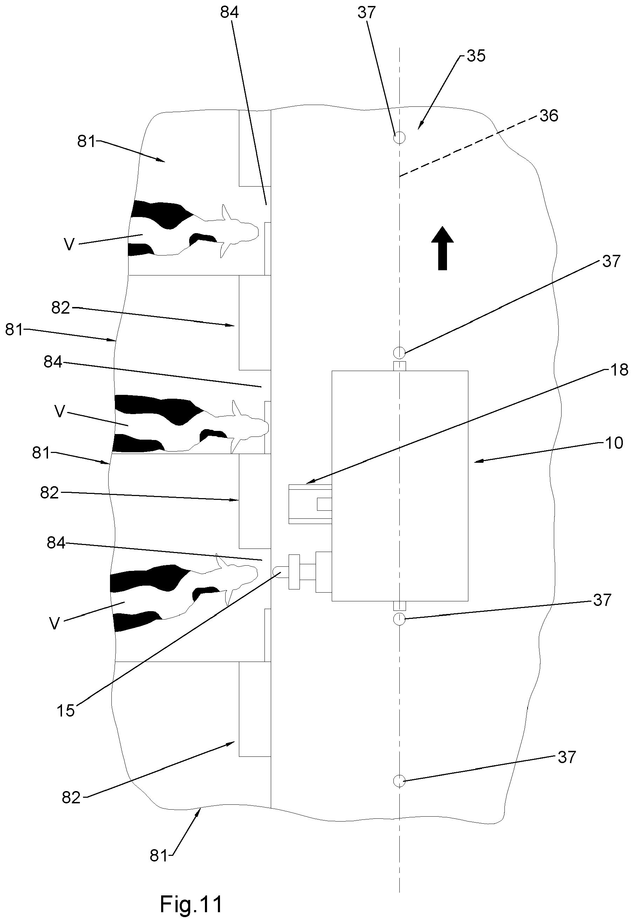

A predetermined path **36** is schematized in Figures 2 and 11 with a dashed line.

In the embodiment of the invention described herein, by way of example and not limitation of the invention itself, the ground guide system **35** comprises:
- a series of guide reliefs **37** planted in the ground along the predetermined path **36;**
- a sliding profile **38** fixed to the load-bearing frame **11,** which sliding profile **38** is configured and positioned in such a way as to couple with the guide reliefs **37** and slide on the same guide reliefs **37.**

The sliding profile **38** comprises, for example, a 'U'-shaped section profile with the opening facing downwards, said sliding profile **38** having a sliding channel shaped so as to allow the passage of the guide reliefs **37** therein.

The sliding profile **38** has a funnel-shaped front end **38a,** that is, comprising centring sidewalls that widen frontward so as to facilitate coupling with the guide reliefs **37** arranged along the predetermined path **36.**

The motorized means **12** for the sliding on the ground, for the movement of the load-bearing frame **11,** comprise, by way of not limiting example, four wheels **12a** and **12b,** of which at least two drive wheels **12b.**

The drive wheels **12b** are driven by an electric motor **12c,** exemplified in Figure 2.

The wheels **12a** and **12b** are placed to slide directly in contact with the ground of a feeding lane.

A breeding system **80,** particularly for calves, schematized by way of example in Figure 11, is also intended to form the object of the invention.

Said breeding system **80** comprises:
- at least one row of individual boxes **81** arranged side by side with one another, each box **81** comprising a feeder **82,** each provided with a loading window **83,** and comprising an opening **84** configured to allow a calf **V** to lean out from said box **81** onto a feeding lane **85;**
- a feeding lane **85,** onto which the loading windows **83** and the openings **84** of the feeders **82** face,
said breeding system **80** being characterized in that it comprises a machine for the feeding of quadrupeds **10** as described above, arranged to transit in said feeding lane **85.**

An example of operation of a quadruped feeding machine **10** and of a breeding system **80** according to the invention is described below.

Initially, the heating system **31** is switched on, in order to bring the water present in the first tank **25** to a temperature between 48°C and 45°C.

When the water in the first tank **25** has reached the set temperature, a certain quantity of this water is transferred to the mixer **27** and from here, through the pump **30b,** it is circulated in the second tank **29,** in the return duct **41** and, through the fourth valve **44,** again in the connection duct **30a** of the transfer line **30.**

Some heating cycles with circulation of the heated water are performed until both the transfer line **30** and the return duct **41** are brought to a temperature between 38°C and 40°C.

At the end of the heating cycles, the water used for these heating cycles is discharged to the outside through the discharge branch **45** which is opened by the fifth valve **46.**

The second group **14,** for preparing and making available the feeding liquid, is ready to operate correctly.

The preparation of the first feeding for a first calf **V** includes the following steps:
- loading water into the mixer **27;**
- start of the mixer **27** whose internal mixing tool starts rotating;
- introduction of a quantity of powdered foodstuff from the doser **26** to the mixer **27;**
- mixing.

At the same time, the machine **10** moves along the predetermined path **36** to move at a first box **81** for feeding a first calf **V.**

After mixing, the first valve **30c** and the fourth valve **44** are controlled so that the feeding liquid can be pumped from the mixer **27** to the second tank **29.**

The pump **30b** is then operated to pump the feeding liquid from the mixer **27** to the second tank **29.**

The feeding liquid, i.e. the powdered milk-based preparation, is accumulated in the second tank **29** at a temperature between 38°C and 39.5°C; the temperature of the feeding liquid is controlled by means of the second temperature sensor **29b.**

When the level sensor **29a** of the second tank **29** signals the end of the meal and emits a signal for the delivery of milk to the next calf **V,** the third valve **43** is switched so that the feeding liquid descends from the second tank **29** to the suction nozzle **15.**

At the same time, the first group **13** dispenses the solid feed into the corresponding feeder **82.**

When the third valve **43** is switched to allow the calf **V** to suckle from the suction nozzle **15,** a time-stamping device, i.e. a timer to be understood of a per se known type, counts the elapsing of a preset opening time interval of said third valve **43,** for example 180 seconds.

After the preset time interval has elapsed, the third valve **43** is switched into a closing setup such that the passage of the feeding liquid is not allowed either towards the suction nozzle **15** or towards the return duct **41.**

It is detected by means of the level sensor **29a** of the second tank **29** whether the feeding liquid has been consumed by the calf **V** or not.

If the level sensor **29a** signals that the minimum level of feeding liquid has not been reached, that is, if it signals that the feeding liquid has been consumed only partially or not at all, an electronic control unit associated with the machine **10** processes a signal of failure of feeding by the calf **V.**

If the calf **V** consumes all the feeding liquid prepared in the second tank **29** before the preset time interval has elapsed, the level sensor **29a** of the second tank **29** signals that the minimum level has been reached and the machine **10** automatically starts a new preparation cycle for a next calf **V.**

After the preset time interval has elapsed, and immediately after the detection of either no consumption or completed consumption, the third valve **43** is switched so that the unconsumed feeding liquid is discharged through the return duct **41** and the discharge branch **45.**

Subsequently, a new cycle of preparation of feeding liquid in the mixer **27** and of filling of the second tank **29** begins as described above, while the machine **10** moves autonomously towards a next box **81** along the predetermined path **36.**

The second tank **29** has a vent for the exit of air during the filling steps of the tank itself.

At this vent there is a closing device **50** configured to close the vent during the washing and sanitizing steps of the second group **14.**

Such closing device **50** comprises for example one or more pneumatic valves.

In particular, the closing device **50** closes the vent during a washing step of the suction nozzle **15** from the inside.

The closing device **50** is configured to allow the passage of a flow of pressurized air from the outside towards the inside of the second tank **29.**

The machine **10** also comprises an on-board compressor **60,** not illustrated for simplicity's sake and to be understood as being of a per se known type.

This compressor **60,** schematized in Figure 2, is configured to serve the pneumatic drives that are on board the machine **10** itself.

The pressurized air introduced into the second tank **29** allows washing from the inside the suction nozzle **15.**

The electric motors on board the machine **10** are powered by cable, or alternatively they are powered by respective on-board batteries.

Practically, it has been established that the invention achieves the intended task and objects.

In particular, with the invention a machine has been developed that in a breeding farm allows saving in terms of labour for the activities of delivering foodstuffs to livestock.

In addition, with the invention a compact machine has been developed that can also transit in the already existing feeding lanes.

Furthermore, with the invention a machine has been developed that operates automatically with precision and speed that are higher than what is normally achievable by a human operator.

In addition, with the invention a machine has been developed that respects the needs and health of the animals to which it confers foodstuffs.

The invention thus conceived is susceptible of numerous modifications and variations, all of which are within the scope of the invention, as defined in the claims.

In practice, the components and materials used, as well as the dimensions and contingent shapes, provided they are compatible with the specific use, may be any depending on the needs and the state of the art.

Where the features and techniques mentioned in any claim are followed by reference marks, such reference marks are intended to be affixed solely for the purpose of increasing the intelligibility of the claims and, consequently, such reference marks have no limiting effect on the interpretation of each element identified by way of example by such reference marks.

## Claims

1. Machine (10) for the feeding of quadrupeds and in particular of calves, comprising a load-bearing frame (11), on which there are mounted:
- motorized means (12) for sliding on the ground, for the movement of said load-bearing frame (11);
- a first group (13) configured for the automatic dispensing of solid feed, said first group (13) comprising a first hopper (16) for a solid feed with an upper loading opening (16a) and a bottom (16b) with an outlet opening (16c), said first group (13) comprising lifting means (17) configured to lift said solid feed from said outlet opening (16c) to a discharge chute (18);
- a second group (14) comprising a suction nozzle (15), said second group (14) being configured for preparing and making available a feeding liquid by means of said suction nozzle (15);
**characterized in that** said discharge chute (18) is telescopic, and is actuated by a corresponding actuator (22).

2. Machine according to claim 1, **characterized in that** said lifting means (17) comprise a lifting tube (19) inside which there is a screw, driven by a motor (20), which causes the ascent of said solid feed from said outlet opening (16c) to a discharge port (21).

3. Machine according to the preceding claim, **characterized in that** said discharge port (21) is configured and positioned such that said solid feed falls from said discharge port (21) onto said discharge chute (18).

4. Machine according to one or more of the preceding claims, **characterized in that** said second group (14) comprises:
- a first tank (25) for containing water;
- a doser (26) for a powdered foodstuff to be dissolved in water;
- a mixer (27) configured to receive water from said first tank (25) and a quantity of said powdered foodstuff from said doser (26);
- a weighing device (28) configured and positioned so as to detect the weight of said powdered foodstuff to be used in said mixer (27);
- a second collection tank (29) configured to receive and accumulate said feeding liquid;
- a transfer line (30) configured to transfer said feeding liquid leaving said mixer (27) to said second tank (29);
- said suction nozzle (15), configured to receive said feeding liquid from said second tank (29).

5. Machine according to the preceding claim, **characterized in that** said second group (14) comprises a heating system (31) for the water contained in said first tank (25).

6. Machine according to claim 4, **characterized in that** said second group (14) comprises a washing circuit (32) for washing said mixer (27), said second tank (29), said transfer line (30) and said suction nozzle (15).

7. Machine according to one or more of the preceding claims, **characterized in that** it comprises a ground guide system (35) configured to lead said load-bearing frame (11) along a predetermined path (36).

8. Breeding system (80), particularly for calves, comprising:
- at least one row of boxes (81) arranged side by side with one another, each box (81) comprising a feeder (82), each provided with a loading window (83), and each box (81) comprising an opening (84) configured to allow a calf (V) to lean out from said box (81) onto a feeding lane (85);
- a feeding lane (85), onto which said loading windows (83) of said feeders (82) and said openings (84) of said boxes (81) face,
**characterized in that** it comprises a machine for the feeding of quadrupeds (10) according to one or more of claims 1 to 7, arranged to transit in said feeding lane (85).

## Patentansprüche

1. Maschine (10) zum Füttern von vierbeinigen Tieren, insbesondere von Kälbern umfassend einen lasttragenden Rahmen (11), an dem die Maschine befestigt ist:
- motorisierte Mittel (12) zum Gleiten auf dem Boden, um den lasttragenden Rahmen (11) zu bewegen;
- eine erste Gruppe (13), die zum automatischen Ausgeben von Festfutter ausgebildet ist, wobei die erste Gruppe (13) einen ersten Trichter (16) für ein Festfutter mit einer oberen Ladeöffnung (16a) und einem Boden (16b) mit einer Auslassöffnung (16c) umfasst, wobei die erste Gruppe (13) Hebemittel (17) umfasst, die so ausgebildet sind, dass sie das Festfutter von der Auslassöffnung (16c) zu einer Ausladerutsche (18) anheben;
- eine zweite Gruppe (14), die eine Ansaugdüse (15) umfasst, wobei die zweite Gruppe (14) so ausgebildet ist, dass sie mittels der Ansaugdüse (15) eine Futterflüssigkeit zubereitet und zur Verfügung stellt;
**dadurch gekennzeichnet, dass** die Ausladerutsche (18) teleskopisch ist und durch ein entsprechendes Stellglied (22) betätigt wird.

2. Maschine nach Anspruch 1, **dadurch gekennzeichnet, dass** die Hebemittel (17) ein Heberohr (19) umfassen, in dem sich eine von einem Motor (20) angetriebene Schraube befindet, die den Aufstieg des Festfutters von der Auslassöffnung (16c) zu einer Ausladeöffnung (21) bewirkt.

3. Maschine nach dem vorhergehenden Anspruch, **dadurch gekennzeichnet, dass** die Ausladeöffnung (21) so ausgebildet ist und positioniert ist, dass das Festfutter von der Ausladeöffnung (21) auf die Ausladerutsche (18) fällt.

4. Maschine nach einem oder mehreren der vorhergehenden Ansprüche, **dadurch gekennzeichnet, dass** die zweite Gruppe (14) umfaßt:
- einen ersten Behälter (25) zur Aufnahme von Wasser;
- eine Dosiervorrichtung (26) für ein pulverförmiges Lebensmittel, das in Wasser aufgelöst werden soll;
- einen Mischer (27), der so ausgebildet ist, dass er Wasser aus dem ersten Behälter (25) und eine Menge des pulverförmigen Lebensmittels aus der Dosiervorrichtung (26) erhält;
- eine Wiegevorrichtung (28), die so ausgebildet ist und positioniert ist, dass sie das Gewicht des pulverförmigen Lebensmittels, das in dem Mischer (27) verwendet werden soll, erfasst;
- einen zweiten Sammelbehälter (29), der so ausgebildet ist, dass er die Futterflüssigkeit aufnimmt und speichert;
- eine Überführungslinie (30), die so ausgebildet ist, dass sie die den Mischer (27) verlassende Futterflüssigkeit in den zweiten Behälter (29) überführt;
- die Ansaugdüse (15), die so ausgebildet ist, dass sie die Futterflüssigkeit aus dem zweiten Behälter (29) aufnimmt.

5. Maschine nach dem vorhergehenden Anspruch, **dadurch gekennzeichnet, dass** die zweite Gruppe (14) ein Heizsystem (31) für das in dem ersten Behälter (25) enthaltene Wasser umfasst.

6. Maschine nach Anspruch 4, **dadurch gekennzeichnet, dass** die zweite Gruppe (14) einen Waschkreislauf (32) zum Waschen des Mischers (27), des zweiten Behälters (29), der Überführungslinie (30) und der Ansaugdüse (15) umfasst.

7. Maschine nach einem oder mehreren der vorhergehenden Ansprüche, **dadurch gekennzeichnet, dass** sie ein Bodenführungssystem (35) umfasst, das so ausgebildet ist, dass es den lasttragenden Rahmen (11) entlang eines vorbestimmten Weges (36) führt.

8. Zuchtsystem (80), insbesondere für Kälber, umfassend:
- mindestens eine Reihe von Schachteln (81), die nebeneinander angeordnet sind, wobei jede Schachtel (81) einen Fütterer (82) umfasst, der jeweils mit einem Ladefenster (83) versehen ist, und wobei jede Schachtel (81) eine Öffnung (84) umfasst, die so ausgebildet ist, dass ein Kalb (V) sich aus der Schachtel (81) auf einem Fütterbahn (85) hinauslehnen kann;
- einen Fütterbahn (85), auf die die Ladefenster (83) der Fütterer (82) und die Öffnungen (84) der Schachtel (81) einander zugewandt sind,
**dadurch gekennzeichnet, dass** es eine Maschine zum Füttern von vierbeinigen Tieren (10) nach einem oder mehreren der Ansprüche 1 bis 7 umfasst, die so eingerichtet ist, dass sie den Fütterbahn (85) durchläuft.

## Revendications

1. Machine (10) servant à alimenter des quadrupèdes et en particulier des veaux, comprenant un cadre porteur (11), sur lequel sont montés:
- des moyens motorisés (12) servant à coulisser sur le sol, pour le déplacement dudit cadre porteur (11);
- un premier groupe (13) configuré pour la distribution automatique d'aliments solides, ledit premier groupe (13) comprenant une première trémie (16), pour un aliment solide, dotée d'une ouverture de chargement supérieure (16a) et d'un fond (16b) doté d'une ouverture de sortie (16c), ledit premier groupe (13) comprenant des moyens de levage (17) configurés pour soulever ledit aliment solide de ladite ouverture de sortie (16c) vers une goulotte de déchargement (18);
- un second groupe (14) comprenant une buse d'aspiration (15), ledit second groupe (14) étant configuré pour préparer et mettre à disposition un liquide d'alimentation au moyen de ladite buse d'aspiration (15);
**caractérisée en ce que** ladite goulotte de déchargement (18) est télescopique, et est actionnée par un actionneur correspondant (22).

2. Machine selon la revendication 1, **caractérisée en ce que** lesdits moyens de levage (17) comprennent un tube de levage (19) à l'intérieur duquel se trouve une vis, entraînée par un moteur (20), qui provoque la montée dudit aliment solide de ladite ouverture de sortie (16c) à un orifice de déchargement (21).

3. Machine selon la revendication précédente, **caractérisée en ce que** ledit orifice de déchargement (21) est configuré et positionné de manière à ce que ledit aliment solide tombe dudit orifice de déchargement (21) sur ladite goulotte de déchargement (18).

4. Machine selon l'une ou plusieurs des revendications précédentes, **caractérisée en ce que** ledit second groupe (14) comprend:
- un premier réservoir (25) servant à contenir de l'eau;
- un doseur (26) destiné à une denrée alimentaire en poudre à dissoudre dans l'eau;
- un mélangeur (27) configuré pour recevoir de l'eau dudit premier réservoir (25) et une quantité de ladite denrée alimentaire en poudre dudit doseur (26);
- un dispositif de pesage (28) configuré et positionné de manière à détecter le poids de ladite denrée alimentaire en poudre à utiliser dans ledit mélangeur (27);
- un second réservoir de collecte (29) configuré pour recevoir et accumuler ledit liquide d'alimentation;
- une conduite de transfert (30) configurée pour transférer ledit liquide d'alimentation quittant ledit mélangeur (27) vers ledit second réservoir (29);
- ladite buse d'aspiration (15) configurée pour recevoir ledit liquide d'alimentation dudit second réservoir (29).

5. Machine selon la revendication précédente, **caractérisée en ce que** ledit second groupe (14) comprend un système de chauffage (31) de l'eau contenue dans ledit premier réservoir (25).

6. Machine selon la revendication 4, **caractérisée en ce que** ledit second groupe (14) comprend un circuit de lavage (32) servant à laver ledit mélangeur (27), ledit second réservoir (29), ladite conduite de transfert (30) et ladite buse d'aspiration (15).

7. Machine selon l'une ou plusieurs des revendications précédentes, **caractérisée en ce qu'**elle comprend un système de guidage (35) au sol configuré pour diriger ledit cadre porteur (11) le long d'une trajectoire prédéterminée (36).

8. Système d'élevage (80), en particulier pour les veaux, comprenant:
- au moins une rangée de caisses (81) disposées côte à côte, chaque caisse (81) comprenant une mangeoire (82), chacune munie d'une fenêtre de chargement (83), et chaque caisse (81) comprenant une ouverture (84) configurée pour permettre à un veau (V) de se pencher hors de ladite caisse (81) sur une ligne d'alimentation (85);
- une ligne d'alimentation (85), sur laquelle lesdites fenêtres de chargement (83) desdites mangeoires (82) et lesdites ouvertures (84) desdites caisses (81) font face,
**caractérisé en ce qu'**il comprend une machine servant à alimenter des quadrupèdes (10) selon l'une ou plusieurs des revendications de 1 à 7, disposée pour transiter dans ladite ligne d'alimentation (85).
